Europäisches Patentamt

European Patent Office

Office européen des brevets

(11) Publication number: **0 508 084 A1**

# EUROPEAN PATENT APPLICATION

(21) Application number: **92103354.4**

(22) Date of filing: **27.02.92**

(51) Int. Cl.⁵: **G02C 5/00**

(30) Priority: **12.04.91 JP 108759/91**

(43) Date of publication of application:
**14.10.92 Bulletin 92/42**

(84) Designated Contracting States:
**AT DE FR GB IT**

(71) Applicant: **OPTICAL Iijima INC**
**2-1 Shirosaki-cho 9-chome**
**Takefu-shi, Fukui-ken(JP)**

(72) Inventor: **Iijima , Toshiko**
**2-1, Shirosaki-cho 9-chome**
**Takefu-shi, Fukui-ken(JP)**

(74) Representative: **Klingseisen, Franz, Dipl.-Ing.**
**Dr. F. Zumstein Dipl.-Ing. F. Klingseisen**
**Bräuhausstrasse 4**
**W-8000 München 2(DE)**

(54) **Eyeglass frame and method of making same.**

(57) An eyeglass frame is provided which has a pair of lens holders secured in feed relation one to the other by a pair of bridge pieces made of a super elastic alloy material, the lens holders being non-super elastic material, the bridges pieces having surface coatings thereon of a silver solder compatible metal plating such as a nickel-based material, the securement being effected with silver soldering of the bridge pieces at the locations where the plating is present to the lens holders. Temple elements are attached to the lens holders and these each include a base with a hinge member. Temple arms having a silver solder compatible metal plating at an end of each are silver soldered at the plated ends to the hinge members.

FIG. I(a)

FIG. I(b)

EP 0 508 084 A1

## BACKGROUND OF THE INVENTION

The present invention relates to eyeglass frames and, more particularly, to an eyeglass frame of improved construction in regard to utilization of super elastic alloy materials in the structure of the frame, as well as a method by which the eyeglass frame is made.

Generally, an eyeglass frame includes a pair of lens holders in which a user's prescription ground plastic or glass lens are mounted, a bridge joining the lens holders in feed relation side-by-side relation with each other, and temple elements for engagement of temple arms thereof when in open position, with the user's ears to support the lenses in front of the eyes, the temple arms generally being pivoted to the lens frames in manner as allows same to be pivoted to closed position against the lens frames when the user removes the eyeglasses and stores them in a pocket, purse or other place. Another bridge piece defining a support receivable on the user's nose also may be included.

It is desirable that the eyeglass frame have a certain elastic quality thereto, and for such reason, it is known to employ a super elastic alloy material for certain of the eyeglass frame components, particularly for bridge pieces and temple arms. Commonly, the lens frames and attachment members by which the temple arms are connected to the lens holders are non-super elastic alloy materials.

This dissimilarity of materials involved makes it impossible to directly solder join bridge pieces to the lens frames, and the temple arms to the attachment members which are also non-super elastic alloy materials. To allow that component joinder be possible, it heretofore has been the practice to enclose end portions of bridge pieces in tubular members of a, e.g., nickel-alloy and then deform or crimp the tubular members against the super elastic alloy bridge piece end portions. The crimped tube part is then soldered to the non-elastic lens frames. The same foregoing described practice is followed with regard to securing super elastic alloy material temple arms to non-elastic attachment members.

Such soldering usually is with a soft tin and lead solder and the connection does not involve a melting of any parent metal of the joined components.

Need to use tubular members on the super elastic alloy material and to have to crimp same, represents extra fabrication steps that would be better dispensed with if possible. Further, the tubular members are of obtrusive appearance and lend nothing in the way of attractiveness to the appearance of the eyeglass frame. Additionally, inability to directly solder super elastic alloy components to non-elastic ones as, for example, with a strong silver solder joinder means that eyeglass frames made by prior practice do not represent the strongest form of eyeglass frame embodying super elastic alloy material components therein.

## OBJECTS AND SUMMARY OF THE INVENTION

Accordingly, it is an object of the invention to provide an eyeglass frame and method by which it is fabricated which overcomes the drawbacks of the prior art.

It is a further object of the invention to provide an eyeglass frame and fabrication method which allows joinder of super elastic alloy material components with non-elastic ones in the most effective, yet simplified manner.

It is a still further object of the invention to provide an eyeglass frame and fabrication method which enhances the attractiveness of appearance of the eyeglasses as a whole by eliminating unsightly structure. Another object is make eyeglass frame fabrication more efficient by eliminating need for using a tubular member as a component in the fabrication operation.

Briefly stated, there is provided an eyeglass frame which has a pair of lens holders secured in fixed relation one to the other by a pair of bridge pieces made of a super elastic alloy material. The bridge pieces have surface coatings thereon of silver solder compatible metal plating such as a nickel-based material with this securement being effected with silver soldering of the bridge pieces at the the locations where the plating is present to the lens holders. Temple arms of super elastic alloy material and a silver solder compatible metal plating at an end of each, are silver soldered at the plated ends to hinge members on temple element bases attached to the lens holders.

In accordance with these and other objects of the invention, there is provided a eyeglass frame which comprises left and right lens holders, and at least one bridge piece secured to the lens holders for maintaining them in fixed relation one with the other. Left and right temple elements also are provided, these each including a base mountable to an associated lens frame, the base having a pivoting member thereon and there being temple arms fixed to each pivoting member. The bridge piece is made of a super elastic alloy material, and the securement of the bridge piece to the lens holders comprises a silver solder joinder of the former to the latter at locations on a surface of the bridge piece at which a silver solder compatible metal plating is present.

According to feature of the invention, there is further provided in a method for fabricating an eyeglass frame, the applying of a surface coating of a silver solder compatible metal plating to opposite end length portions of an elongated bridge piece of a super elastic alloy material, the positioning of a pair of lens holders in left and right lens holder spaced side-by-side positioning, and the silver soldering of the opposite end length portions of the bridge piece to the respective left and right lens holders.

The above, and other objects, features and advantages of the present invention will become apparent from the following description read in conjunction with the accompanying drawings, in which like reference numerals designate the same elements.

**BRIEF DESCRIPTION OF THE DRAWINGS**

FIGURE 1(a) is a perspective view of an eyeglass frame made in accordance with the principles of the present invention;

FIGURE 1(b) is a fragmentary perspective view on enlarged scale of the eyeglass frame portion shown in the dash line circle in Figure 1;

FIGURE 2(a) is a fragmentary elevational view depicting the bridge piece and lens holders before same are joined together;

FIGURE 2(b) shows the elements illustrated in Figure 2(a) arranged in assembly position;

FIGURE 2(c) shows the Figure 2(b) elements following the soldering together of same as unitary structure; and

FIGURES 3(a)-3(b) are views similar to those of Figures 2(a)-2(b) but of a prior art eyeglass frame construction.

**DETAILED DESCRIPTION OF THE PREFERRED EMBODIMENT**

The present invention deals with fabrication of an eyeglass frame from super elastic alloy materials. As used herein, "super elastic alloy" means an alloy material possessing memory property such that if a formed shape thereof be bent or deformed by an external force applied thereto, the shape will restore to its original form on release of the deforming force.

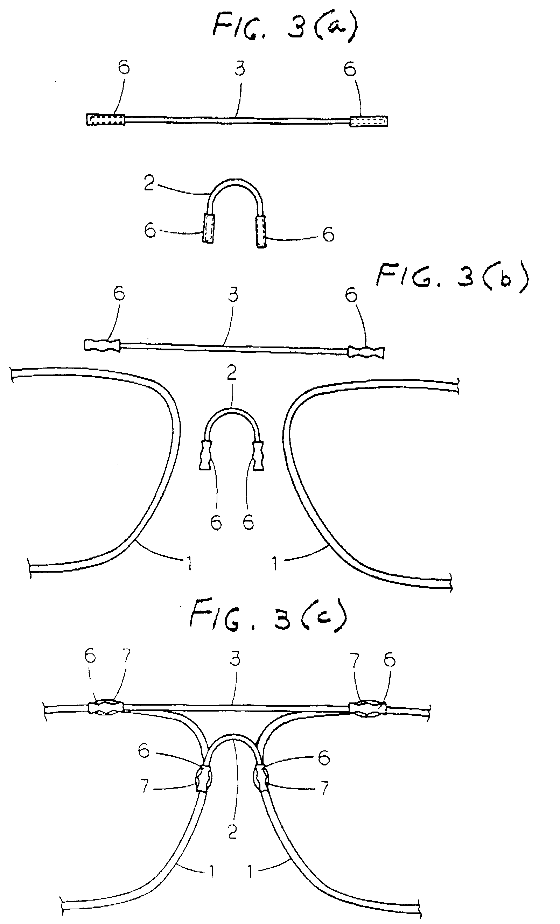

Figures 3(a)-3(c) illustrate a prior eyeglass fabrication method and construction involving joinder of the several components of the eyeglass frame. Figure 3(a) shows bridge pieces 3 and 2 which are used to secure together left and right lens holders 1, Figure 3(b), the final assembly arrangement appearing in Figure 3(c).

The bridge pieces 3,2 are of super elastic alloy material and as such, cannot be directly soldered to the lens frames which usually will be made of non-elastic alloy material. To allow making joinder, the bridge pieces 3,2 first are fitted at opposite end portions with tubular member 6 of nickel. The tubular members 6 are then mechanically fixed to the bridge pieces by deforming or crimping the tubular members tightly against the bridge pieces as seen in Figure 3(b).

The components are then positioned in the Figure 3(c) array and securement is effected with a soldering joinder, the solder being a tin/lead soft solder type. The solder mass 7 occupies interspace between confronting parts of the joined components, there being no melt of the parent material of any component that would produce intermingling of component part materials resulting in what would be a stronger joinder therebetween.

As is seen from Figure 3(c), bridge piece 3, an elongated generally straight component is secured to the two lens frames 1 at peripheral portions of at a first, e.g., top side of each, the securement being at the opposite ends where the deformed tubular members 6 are located. Bridge piece 2 is shaped as an inverted U-shaped member and is secured to portions of the lens holders 1 at portions thereof intermediate said first side of each and lens holder opposite sides, e.g., lens holder bottom sides. The bridge piece 2 it is noted is configured to define a nose piece which sits on a user's nose supporting the eyeglasses when being worn by a user.

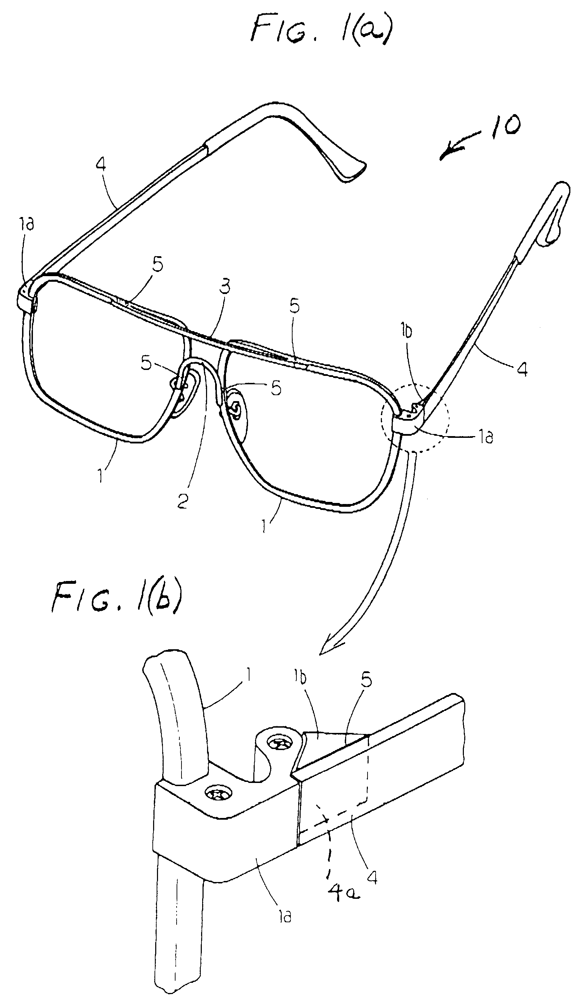

Figure 1 depicts an embodiment of eyeglass frame 10 made in accordance with the invention. The frame includes the non-alloy elastic material lens frames 1, each of which has a temple element attached thereto, the temple element including a base 1a attached to an associated lens frame 1 and the base 1a having a pivoting member 1b which pivots so that a temple arm 4 secured to the pivoting member can be swung between temple arm open(depicted) and closed positions, the temple arms when open being used to supportingly engage the user's ears in conventional manner.

The temple bases including the pivoting members are made of non-elastic alloy material, and the bridges pieces 3,2 and the temple arms 4 are of super elastic alloy material.

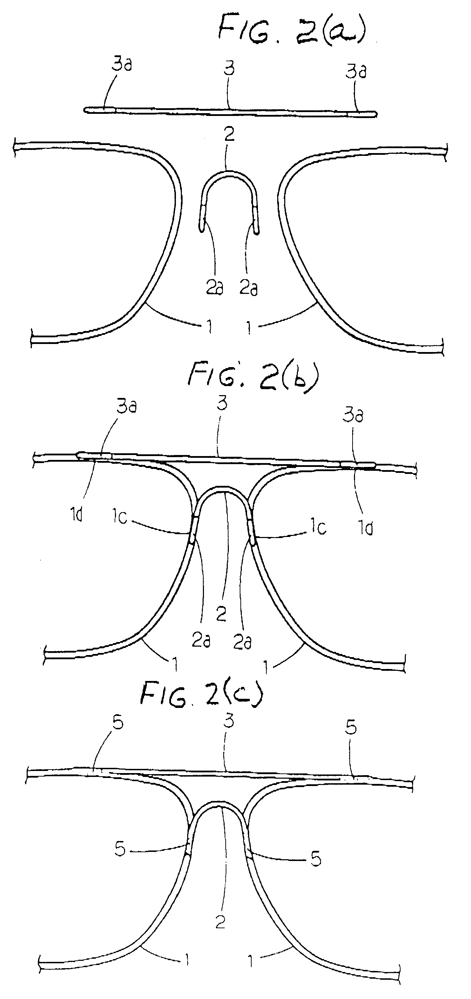

Referring to Figure 2(a), bridge pieces 3 and 2 have surface coatings 3a, 2a, respectively, applied thereto at opposite ends of the pieces, the coatings being one of a silver solder compatible metal plating material such as a nickel-based material. The coatings it is seen are on the bridges pieces at locations where the latter will be positioned in contact with the lens frames and then joined thereto, these contact points on the lens frames being as at 1c and 1d illustrated in Figure 2(b) which depicts how the components are positioned in assembly relationship one with the other.

With the components in the Figure 2(b) relationship, the bridge piece 3 is silver solder joined to the lens frames at a 5. A silver solder securement provides a stronger joiner of the components than in the prior practice of using a tin/lead soldering, and particularly in that it allows for melting of parent material and interfusion of component materials. Bridge piece 2 is silver soldered to the lens frames as at 5 in the same fashion.

Figure 1(b) depicts the manner in which the temple arms 4 are joined to the pivoting member 1b. An end portion of each temple arm has a silver solder compatible metal plating applied thereto as ar 4a, and then it is silver soldered to the pivoting member as at 5.

With regard to the materials from which the eyeglass frame is fabricated, the lens holders can be of non-elastic alloys, representative of such being a 65% wt. Nickel, 34.5% wt. Copper, 0.5% wt Manganese composition, a titanium base alloy as well as others. The temple base and pivoting member can comprise a Nickel-Copper-Zinc composition, this being a non-elastic type alloy.

The super elastic alloy materials of which the bridge pieces and temple arms are made include Nickel-Titanium alloys, Copper-Zinc alloys, Copper-Aluminum-Nickel alloys, certain such alloys as include Cobalt, and others. An advantageous silver solder composition is one comprising 62% wt. Silver, 2% wt. Copper, 3% wt. Zinc, 3% wt. Nickel and 30% wt Cadmium. Silver solder compatible plating materials preferably comprise Nickel-based ones, those Nickel plated in a range of a temperature from 50 until 60 degrees being advantageous.

By making the bridge pieces and temple arms with super elastic alloy materials, original shaped structure configuration of the eyeglass frame is assured in that any subsequent deformation such as a twisting between the lens holders produced by untoward applied force will be eliminated when the applied force is released. This means that accidental shape deformations which in the past resulted in frame fracture, breakage or non restorable shape alteration from original configuration are no longer a problem to continued serviceability and use of the eyeglasses.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

**Claims**

1. An eyeglass frame comprising
   left and right lens holders,
   at least one bridge piece secured to the lens holders for maintaining them in fixed relation one with the other, and
   left and right temple elements carried at the respective left and right lens holders, the temple elements each including a base mountable to an associated lens frame, the base having a pivoting member thereon, and a temple arm fixed to the pivoting member, the bridge piece being of a super elastic alloy material, the securement of the bridge piece to the lens holders comprising a silver solder joinder of the former with the latter at locations on a surface of the bridge piece at which a silver solder compatible metal plating 19 present.

2. An eyeglass frame in accordance with claim 1 in which the at least one bridge piece is secured to the peripheral portions of the lens holders at a first side of each, the eyeglass frame further comprising a second bridge piece of a super elastic alloy material secured to the lens holders at portions thereof intermediate said first side of each and lens holder sides opposite said first sides by a silver solder joinder of the second bridge piece to the lens holders at locations on a surface of said second bridge piece at which a silver solder compatible metal plating is present.

3. An eyeglass frame in accordance with claim 2 in which the silver solder compatible metal plating is a nickel-based material.

4. An eyeglass frame in accordance with claim 1 in which the temple arms are of a super elastic alloy material, the temple arms each being fixed to its associated pivoting member by a silver solder joinder therewith at locations on the temple arm at which a silver solder compatible surface metal plating is present.

5. An eyeglass frame in accordance with claim 4 in which the silver solder compatible metal plating is a nickel-based material.

6. An eyeglass frame in accordance with claim 1 in which the bridge piece is an elongated member, and the metal plating is a nickel-based material and present on said bridge piece surface along at least two discrete length portions thereof.

7. An eyeglass frame in accordance with claim 6 in which the discrete length portions are at opposite ends of said bridge piece, the bridge piece between said opposite end length portions being of substantially straight configuration.

8. An eyeglass frame in accordance with claim 2 in which the second bridge piece is of inverted U-shape, and the metal plating is a nickel-based material and present on said second bridge piece surface along tip end portions of parallel legs of the U-shape.

9. An eyeglass frame in accordance with claim 3 in which the super elastic alloy is one of a nickel-titanium alloy, a copper-zinc-aluminum alloy, and a copper-aluminum-nickel alloy.

10. An eyeglass frame in accordance with claim 3 in which the lens holders are one of a nickel-copper-zinc alloy, and a titanium alloy, the temple element base being a nickel-copper-zinc alloy.

11. In a method for fabricating an eyeglass frame, the steps comprising
    applying a surface coating of a silver solder compatible metal plating to opposite end length portions of an elongated bridge piece of a super elastic alloy material,
    positioning a pair of lens holders in left and right lens holder spaced side-by-side positioning, and silver soldering the opposite end length portions of the bridge piece to the respective left and right lens holders.

12. The method of claim 11 further comprising attaching the bases of temple elements to each of the lens holders, the bases having a pivoting member thereon, applying a surface coating of a silver solder compatible metal plating to an end of temple arms of a super elastic alloy material associated with each temple element, and silver soldering the said ends of the temple arms to the pivoting member of the associated temple element.

13. The method of claim 12 in which the silver soldering of the bridge piece to the lens holders is effected to portions of the lens holders at a first side of each, the method further comprising applying a surface coating of a silver solder compatible metal plating to tip end portions of parallel legs of a U-shaped second bridge piece of super elastic alloy material, positioning the second bridge piece in inverted U disposition with the coated tip ends thereof contacting the lens holders at locations on each intermediate said first side of each and lens holder sides opposite said first sides, and securing said tip ends to said lens holders at the contact locations in silver solder joinder of the former with the latter.

FIG. 1(a)

FIG. 1(b)

FIG. 2(a)

FIG. 2(b)

FIG. 2(c)

FIG. 3 (a)

FIG. 3 (b)

FIG. 3 (c)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 450 224 (NAKANISHI OPTICAL CO) * the whole document * --- | 1-8 | G02C5/00 |
| P,X | EP-A-0 450 225 (NAKANISHI OPTICAL CO) * the whole document * --- | 1-8 | |
| X | US-A-4 952 044 (M. MURAI) * the whole document * --- | 1-10 | |
| A | FR-A-2 504 284 (NIPPON GAKKI SEIZO) * claims * --- | 1-10 | |
| A | FR-A-2 494 859 (NIPPON KOGAKU K.K.) * claims * --- | 1-10 | |
| A | EP-A-0 338 586 (TOKIN CORPORATION) * abstract; claims * --- | 1 | |
| A | US-A-4 893 917 (K. EBATA) * abstract; claims * ----- | 1 | TECHNICAL FIELDS SEARCHED (Int. Cl.5) G02C |

The present search report has been drawn up for all claims

| Place of search | Date of completion of the search | Examiner |
|---|---|---|
| THE HAGUE | 23 JUNE 1992 | CALLEWAERT H.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)